# EUROPEAN PATENT APPLICATION

(11) **EP 3 378 908 A1**
(43) Date of publication of application: **26.09.2018**
(21) Application number: 17162647.6
(22) Date of filing: 23.03.2017
(51) Int. Cl.: C09D 11/033, C09D 11/08, C09D 11/107

(54) **GRAVURE PRINTING INK**

(71) Applicant: Siegwerk Druckfarben AG & Co. KGaA, 53721 Siegburg (DE)
(72) Inventor: Leineweber, Ralf, 53721 Siegburg (DE); Ruspic, Christian, 53721 Siegburg (DE); Schmitt, Dominik, 53271 Siegburg (DE); Winchenbach, Ralf, 57080 Siegen (DE)
(74) Representative: Hepp Wenger Ryffel AG

(57) **Abstract**

The present invention is related to a varnish for a publication gravure ink and to a composition for making said varnish, wherein said varnish comprises the reaction product of tall oil pitch, an α,β-unsaturated carboxyl acid, and an amine, in the form of a salt thereof wherein the counter-ion is a metal in the oxidation state +II, preferably Ca²⁺, together with a resin having a softening point above 80°C. The present invention is furthermore related to a printing ink composition comprising said varnish, to a method of making said varnish and printing ink, and to the use of said printing ink in publication gravure printing.

## Description

The present invention is related to a publication gravure ink comprising a binder system based on tall oil pitch.

Gravure printing is a specific printing process in which the image to be printed is recessed into the surface of a printing plate or cylinder. In this process, the printing cylinder is flooded with ink, and the cylinder surface is wiped clean to leave ink only in the recessed, image areas. Printing is then conducted onto fairly absorbent substrates. Gravure printing uses comparably low-viscosity inks. The inks vary depending on whether they are being used to print publications or packaging. Publication inks rely on toluene as solvent, whereas packaging inks use a variety of, mainly, aliphatic solvents.

Publication gravure printing is used in the manufacturing of coloured press articles which are to be produced in high volumes, such as paper supplements (advertising etc.), magazines or catalogues. Since for those purposes a high amount of ink is required, the publication gravure inks have to be as cost-efficient as possible. The components used in the ink have to be compatible with each other and have to be soluble in the used solvent, which is toluene. On the other hand, the inks have to meet quality requirements such as good blocking behaviour, scratch resistance, and good optical properties. Moreover, the inks have to possess the required viscosity and dilutability as well as good drying properties. On the one hand, in light of the high ink volumes which are needed, the publication gravure inks are stored in large tanks and pumped to the printing machines. This requires a low-viscosity ink.

In the state of the art, metal rosin resinates, such as zinc, magnesium or calcium rosin resinates, have been suggested as binder component for publication gravure inks. While metal rosin resinates provide the inks with a variety of the required characteristics, the resulting inks have a very low dilution rate. Accordingly, in order to increase the dilutability of those publication gravure inks, suitable co-resins have been incorporated into the inks. For example, cellulose derivatives such as ethyl cellulose have been used. However, those compounds are very expensive and do not provide the inks with all necessary characteristics.

Furthermore, gum rosin based resins, in particular gum rosin-based resins, have been used in publication gravure inks as additional binder component in combination with resinates, in order to obtain the desired characteristics of the composition. However, due to an increased demand in recent years a shortage of availability of those resins has arisen, temporarily resulting in a dramatic price increase.

It was the object of the present invention to provide a composition for the publication gravure ink process which does not suffer from the drawbacks of the above discussed prior art, in particular to provide a composition for the publication gravure ink process having desired dilutability properties in combination with satisfactory ink properties, and which is more cost-efficient than inks known from the art.

According to the present invention, the above object has been solved by a composition as defined in claim 1. Said composition can be used for the synthesis of a varnish for a publication gravure ink.

In particular, the present invention is related to a composition comprising
- tall oil pitch,
- an α,β-unsaturated carboxyl acid, preferably maleic acid or a derivate therefrom, most preferably maleic anhydride,
- an amine, a resin having a softening point above 80°C, preferably modified tall oil resin, most preferably fumarized tall oil resin,
- a compound of a metal in the oxidation state +II, preferably calcium hydroxide,
- toluene,
- water.

Said composition can be converted into a varnish, comprising,
- the reaction product of tall oil pitch, an α,β-unsaturated carboxyl acid, preferably maleic acid or a derivate therefrom, most preferably maleic anhydride, and an amine, in the form of a salt thereof wherein the counter-ion is a metal in the oxidation state +II, preferably Ca²⁺,
- a resin having a softening point above 80°C, preferably modified tall oil resin, most preferably fumarized tall oil resin, or a salt thereof wherein the counter-ion is a metal in the oxidation state +II, preferably Ca²⁺,
- toluene,
- water.

An essential component of the varnish of the present invention is a reaction product of tall oil pitch, an α,β-unsaturated carboxyl acid, preferably maleic acid or a derivate therefrom, most preferably maleic anhydride, and an amine.

Tall oil pitch is a by-product of the paper-making process. During paper-making, the so-called "black liquor" is obtained, which can be concentrated and left to settle. The top layer after settlement is called "tall oil soap", which can be separated. By reaction with acid, the "crude tall oil" is formed from the separated "tall oil soap". In order to obtain tall oil, the crude tall oil is then distilled. The residue of said distillation is called tall oil pitch.

Usually tall oil pitch contains at least three times as much unsaponifiable material as the crude tall oil. Typically, tall oil pitch contains 10-45% rosin acids (mainly abietic acid, but abietic acid derivatives and other acids such as pimaric acid are also present in some amounts), 10-55% fatty acids (mainly oleic, linoleic and palmitic acids) and 25-80% of a balance (to sum up to 100%) which is a complex mixture of sterols and other higher alcohols as well as some hydrocarbons. Some of the balance may be esters of some of the alcohols and fatty acids contained in the tall oil pitch.

Tall oil pitch is relatively cheap and has been suggested as component in printing inks. For example, in EP-0 388 025 A2 tall oil pitch was suggested for modification of the main component of a publication gravure ink, a rosin resin. Said publication gravure inks were based on a combination of a rosin resin and a polystyrene type resin. No modification of tall oil pitch was described in said document.

According to the present invention, the tall oil pitch is reacted with an α,β-unsaturated carboxyl acid. Any α,β-unsaturated carboxyl acid which is capable of undergoing a Diels-Alder reaction may be used, i.e. the carbon-carbon double bond should be sterically capable of reacting with a suitable diene, and it should be sufficiently electron deficient. The α,β-unsaturated carboxyl acid can be, for example, acrylic acid, fumaric acid or itaconic acid. It is, however, preferred that the α,β-unsaturated carboxyl acid contains an additional electron-withdrawing substituent at the carbon-carbon double bond, such as an additional carboxylic acid group or derivative therefrom (such as halogenide, anhydride, ester), a cyano group, or a carbonyl group. Especially preferred are fumaric acid or maleic acid or carboxylic acid derivatives therefrom, such as the respective mono or diesters, mono or dihalogenides (preferably mono or dichlorides), or maleic anhydride. Maleic anhydride is especially preferred, according to the present invention.

Without wishing to be bound by this theory, it is believed that during reaction of tall oil pitch with the α,β-unsaturated carboxyl acid, preferably maleic acid or a derivate therefrom, most preferably maleic anhydride, a Diels-Alder reaction takes place.

It is known from literature (Wiyono et al., Pak. J. Biol. Sci. 10 (2007), 1588-1595), that the main rosin acid component of tall oil pitch, abietic acid, is isomerized to levopimaric acid, which undergoes a Diels-Alder reaction with e.g. maleic anhydride:

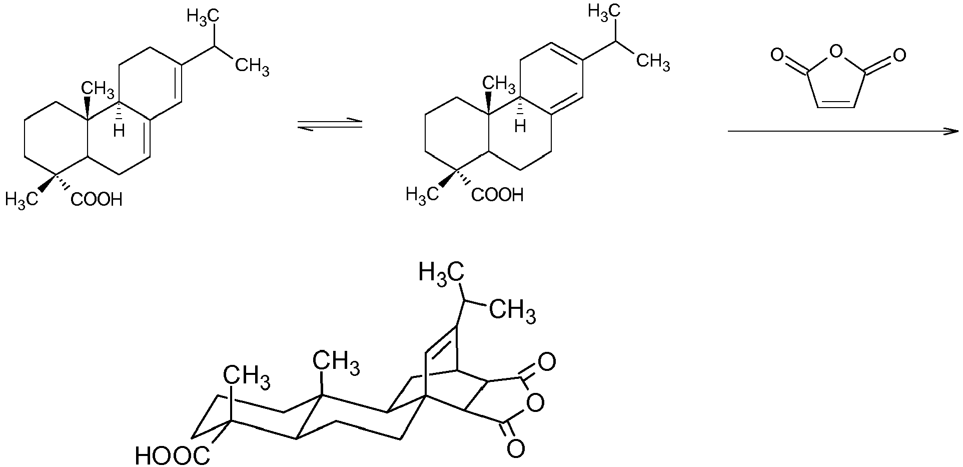

This Diels-Alder product comprises carboxylic acid moieties which may undergo reaction with an amine (or can be neutralized with a compound of a metal in the oxidation state +II, preferably calcium hydroxide. A possible structure of a respective reaction product (binder component of the varnish of the invention) may be as follows:

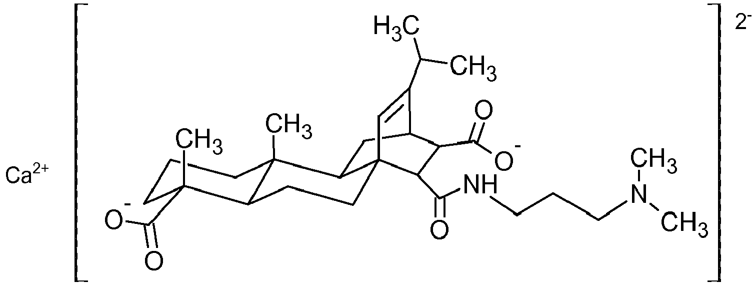

As amine, any mono or multifunctional amine which contains at least one mono or diamino group may be used which is capable of reacting with a carboxylic acid group of the above described reaction product of tall oil pitch and α,β-unsaturated carboxyl acid. Examples of suitable monoamines are metyhlamine, ethylamine, 1-propylamine, 2-propylamine, 1-butylamine, 2-butylamine, or t-buytlamine. Examples of suitable diamines are ethylene diamine, hexamethylene diamine, tetramethylene diamine, piperazine, piperidine, isophorone diamine, propane diamine, phenylenediamine, 3-dimethylamino-1-propylamine (DMAPA), tetraethylenepentamine (TEPA), pentaethylenehexamine (PEGHA), diethylenetriamine (DETA) and mixtures thereof. Also, triamines such as diethylene triamine or bis (hexamethylene) triamine may be used according to the present invention.
The compound of a metal in the oxidation state +II may be selected from the group consisting of respective metal oxides, metal hydroxides, metal carbonates, metal hydrogencarbonates, metal acetates, or metal fatty acid salts. Preferably, the metal is magnesium, calcium or zinc. Preferred compounds are Ca(OH)₂, MgO or ZnO.

The Diels-Alder reaction and the related reaction conditions are well-known to a skilled person. According to a preferred embodiment of the present invention, the reaction is conducted under the conditions described below.

The subsequent reaction of the thus obtained reaction product with an amine and optionally a compound of a metal in the oxidation state +II, preferably calcium hydroxide may be carried out sequentially or in a one-pot reaction.

The reaction conditions for forming an amide from a carboxylic acid or derivative therefrom and an amine, as well as the reaction of a carboxylic acid group with a compound of a metal in the oxidation state +II, preferably calcium hydroxide, are well-known to a skilled person. According to a preferred embodiment of the present invention, the reaction between the reaction product from tall oil pitch and the α,β-unsaturated carboxyl acid with the amine and the compound of a metal in the oxidation state +II are carried out simultaneously in a solvent or a mixture of solvents, preferably a mixture of toluene and water, under heating, and in a final step any water added to the reaction mixture and formed during the reaction is removed by distillation. For example, the reaction may be performed in a device with a conventional water-separating unit, such as a Dean-Stark apparatus.

According to a preferred embodiment of the present invention, tall oil pitch and the α,β-unsaturated carboxyl acid, preferably maleic acid or a derivate therefrom, most preferably maleic anhydride, are reacted in a ratio of oil pitch to α,β-unsaturated carboxyl acid from 2.5: 1 to 30:1, preferably 10:1 to 20:1.

Therefore, according to a preferred embodiment of the present invention, the composition for preparing the varnish of the inks of the present invention comprises, each based on the weight of the entire composition, an amount of tall oil pitch is in the range from 30 to 50 wt.-%, preferably 40 to 50 wt.-%, an amount of α,β-unsaturated carboxyl acid, preferably maleic acid or a derivate therefrom, most preferably maleic anhydride, in the range from 2 to 7.5 wt.-%, preferably 2 to 5 wt.-%, an amount of amine in the range from 0.2 to 3.5 wt.-%, preferably 0.3 to 1 wt.-%, and an amount of a compound of a metal in the oxidation state +II, preferably calcium hydroxide, in the range from 1.5 to 2.5 wt.-%, preferably 1.5 to 2 wt.-%.

In addition to the above components which react with each other under formation of the above described binder component, the composition for preparing the varnish of the inks of the present invention comprises a further binder component at least one resin having a softening point above 80°C. This may be a natural or synthetic resin suitable for use in a publication gravure printing ink. Preferably, said resin is a modified tall oil resin, most preferably fumarized tall oil resin. Fumarized tall oil resin is known in the art and may be obtained by a Diels-Alder reaction of tall oil resin with fumaric acid similar to the conditions described above for tall oil pitch. Preferably, said resin having a softening point above 80°C is present in the composition in an amount in the range from 5 to 25 wt.-%, preferably 5 to 15 wt.-%, based on the weight of the entire composition. It is preferred to use only one such resin, but a combination of more of the above resins having a softening point above 80°C may also be used, if desired.

Furthermore, the composition for preparing the varnish of the inks of the present invention comprises toluene as a solvent. Preferably, toluene is present in an amount in the range from 40 to 60 wt.-%, preferably 45 to 55 wt.-%, based on the weight of the entire composition.

Furthermore, the composition for preparing the varnish of the inks of the present invention comprises water. The water is only necessary for the preparation of the varnish of the invention from said composition. At the end of the preparation of the varnish, the water is completely removed, as already explained above. Preferably, water is present in an amount in the range from 0.5 to 1.0 wt.-%, preferably 0.6 to 0.9 wt.-%, based on the weight of the entire composition.

According to a very preferred embodiment of the present invention, the composition for preparing the varnish of the inks of the present invention comprises the following components:

| | |
|---|---|
| Tall oil pitch | 30.0 - 50.0 wt.% |
| Maleic anhydride | 2.0 - 7.5 wt.% |
| Amine (e.g. Diethylenetriamine (DE-TA)or 3-Dimethylamino-1-propylamine (DMAPA) or tetraethylenepentamine (TE-PA)) | 0.2 - 3.5 wt.% |
| Ca(OH)2 | 1.5 - 2.5 wt.% |
| Fumarized TOR | 5.0 - 25.0 wt.% |
| Toluene | 40.0 - 60.0 wt.% |
| Water | 0.5 - 1.0 wt.% |

According to the present invention, all percentages of components of the composition, varnish, or printing ink of the invention are to be understood such that the sum of all indicated percentages is 100%.

As already described above, the composition of the present invention is used for preparing the varnish of the inks of the present invention.

Thus, the present invention is also related to a process for preparing a varnish, comprising the steps of:
a) mixing tall oil pitch with an α,β-unsaturated carboxyl acid, preferably maleic acid or a derivate therefrom, most preferably maleic anhydride, and heating said mixture,
b) adding a resin having a softening point above 80°C, preferably modified tall oil resin, most preferably fumarized tall oil resin, a compound of a metal in the oxidation state +II, preferably calcium hydroxide, an amine, toluene, and water
c) removing the water by distillation.

As already explained above, in step a) it is believed that a Diels-Alder reaction takes place between tall oil pitch and the α,β-unsaturated carboxyl acid. According to a preferred embodiment of the present invention, the reaction between tall oil pitch and the α,β-unsaturated carboxyl acid, preferably maleic acid or a derivate therefrom, most preferably maleic anhydride, is carried out under heating in the range from 150 to 200°C, preferably, 160 to 190°C, for 0.5 h to 5 h, preferably 1 to 3h.

The presence of a solvent is only necessary if under the reaction conditions the α,β-unsaturated carboxyl acid is solid. If a solvent is required, preferably toluene may be used. A catalyst is typically not necessary, but a Lewis acid such as AlCl₃ may be used if desired.

According to an alternative embodiment of the present invention, a portion of the tall oil pitch, for example 25% of the entire amount thereof, may only be added to the mixture at the end of step a), i.e. when heating is stopped.

After step a) is finalized, heating is stopped, and in a subsequent step b) the reaction mixture is allowed to cool to a lower temperature, preferably in the range from 60 to 90°C, more preferably 65 to 80°C.

During the time where the temperature decreases, the resin with a softening point above 80°C, the amine, the compound of a metal in the oxidation state +II, toluene and water are added. Toluene may be added sequentially in portions.

According to a preferred embodiment of the present invention, the resin with a softening point above 80°C is added immediately after termination of step a), i.e. when heating is stopped. For example, the resin with a softening point above 80°C may be added simultaneously with a portion of the tall oil pitch, as described above.
According to the present invention, it is possible to first add the amine to the reaction mixture and only add the compound of a metal in the oxidation state +II at a later stage. However, according to a preferred embodiment of the present invention, the reaction between the reaction product from tall oil pitch and the α,β-unsaturated carboxyl acid with the amine and the compound of a metal in the oxidation state +II are carried out simultaneously. It is therefore preferred that the amine and the compound of a metal in the oxidation state +II are added simultaneously.

According to a preferred embodiment of the present invention, once the reaction mixture has reached a temperature in the range from 60 to 90°C, more preferably 65 to 80°C, water is added.

After addition of all components, the reaction mixture is kept at the established temperature or preferably is slightly heated again to a temperature in the range from 80 to 100°C, more preferably 85 to 95°C.

The reaction mixture is kept under the selected conditions for 30 minutes to 3 h, preferably 1 h to 2h.

In a final step c), the water is removed from the reaction mixture. Preferably this is achieved by a distillation step. Preferably, the temperature is increased in this step to more than 100°C, preferably 110 to 120°C, so that any water added to the reaction mixture and formed during the reaction is removed by distillation. Methods for removing water by distillation are well-known to a skilled person. For example, the reaction may be performed in a device with a conventional water-separating unit, such as a Dean-Stark apparatus.

After the water has been removed, the final varnish is allowed to cool and can be used for preparing the ink of the present invention.

According to a preferred embodiment of the present invention, the varnish prepared as above has an acid number in the range from 50 to 80 mg (KOH)/g, preferably from 55 to 70 mg (KOH)/g.

According to a preferred embodiment of the present invention, the varnish prepared as above has a solids content in the range from 40 to 70%, preferably 50 to 60%.

The varnish of the present invention is an essential component of the printing ink composition of the present invention. The present invention is thus also related to the use of a varnish described above as a binder component in a publication gravure printing ink. As described above, the varnish of the present invention provides the resulting ink composition in a cost-efficient way with the required properties such as, for example, very good viscosity and dilutability characteristics, good blocking and scratch resistance, and good optical characteristics such as gloss.

Thus, the present invention is also related to a printing ink composition, comprising
- a colorant
- a varnish as described above,
- optionally an additional extender component,
- toluene.

According to a preferred embodiment of the present invention, the printing ink comprises the varnish as described above in an amount from 30 to 80 wt.-%, preferably 40 to 70 wt.-%, especially preferred from 50 to 60 wt.-%, based on the weight of the entire printing ink.

The above described varnish can be mixed with any colorant conventionally used in the publication gravure printing process. According to the present invention, the term colorant comprises pigments and dyes. Dyes are soluble in the ink medium, whereas pigments are not. According to the present invention, preferably pigments are used as colorants. Typical pigments for publication gravure printing inks are, for example, carbon black, iron blue, calcium lithol reds, azo yellows, diarylide yellows, and phthalocyanines.

According to a preferred embodiment of the present invention, the printing ink comprises a colorant in an amount from 10 to 30 wt.-%, preferably 15 to 25 wt.-%, based on the weight of the entire printing ink.

According to a preferred embodiment of the present invention, a pigment may be dispersed in a low-viscous resin conventionally used in the art for that purpose. Exemplary low-viscous resins are resinates. Pre-dispersion of the pigment in said resin is achieved by agitation, e.g. stirring. The dispersed pigments are subsequently comminuted (i.e. ground) to a desired particle size using a standard equipment such as a ball mill. The thus obtained dispersed pigments are also referred to as "ink base", which is added to the printing ink of the present invention in the amounts described above.

The composition of the present invention may comprise, in addition to the above described varnish, another extender component. Preferably, this extender component is a resinate.

Metal rosin resinates and their preparations are known in the art. According to the present invention, any metal rosin resinate conventionally in publication gravure inks can be employed. For example, zinc, magnesium and calcium resinates of rosin resins such as wood rosin, gum rosin, tall oil rosin, polymerized or dimerized derivatives of those rosins, or modified derivatives of those rosins, such as formaldehyde-modified rosins, phenolic-modified rosin resin esters, hydrocarbon-modified rosins, maleic-modified rosins, or fumaric-modified rosins, or mixtures thereof, can be used. Examples of manufacturing methods of metal rosin resinates are described, for example, in US-4,198,329, US-4,528,036, and US-4,552,592.

If present, according to a preferred embodiment of the present invention said additional extender component may be used in an amount in the range from 1 to 15 wt.-%, preferably 2 to 10 wt.-%, based on the weight of the entire printing ink.

According to a preferred embodiment of the present invention, the printing ink comprises toluene as a solvent in an amount from 30 to 70 wt.-%, preferably 40 to 60 wt.-%, based on the weight of the entire printing ink.

According to an alternative embodiment of the present invention, the printing ink may additionally comprise conventional additives for publication gravure printing inks, such as fillers, waxes, anti-separation additives such as bentonite, or anti-foaming agents.

Typical fillers for publication gravure printing inks are calcium carbonate, magnesium carbonate or china clay, or mixtures thereof. Preferably, the amount of fillers is in a range of from 0.1-3 wt.-%, more preferably 0.1-2 wt.-%, based on the weight of the entire printing ink.

Typical waxes for publication gravure printing inks are polyethylene or paraffin waxes. Preferably, the waxes are added in form of a varnish to the ink composition. Preferably, the amount of waxes is in a range of from 0.1-3 wt.-%, more preferably 0.1-2 wt.-%, based on the weight of the entire printing ink.

Other additives such as anti-foaming agents may be present in in a range of from 0.01-5 wt.-%, based on the weight of the entire printing ink.

The above described printing ink can be obtained by mixing all ingredients with each other under agitation and optionally slightly heating.

The present invention is also related to the use of a printing ink composition as described above for publication gravure printing.

According to the present invention, a process of printing a product in a publication gravure printing process comprises the step of printing at least a part of the surface of a substrate with a printing ink as described above. Substrates typically used in publication gravure printing, such as paper, as known to the skilled man and need not be discussed in detail here.

The present invention will now be discussed in more detail with reference to non-limiting examples.

### Example 1: Preparation of varnish of the invention

In a reaction vessel, 1858.8 g tall oil pitch and 150.7 g maleic anhydride were combined and heated to 180°C. The reaction mixture was held at 180°C for 2 hours.

Heating was stopped, and 662.2 g tall oil pitch and 297.0 g fumarized tall oil resin (Fenno Tor 212 H from Kemira) were added.

The reaction mixture was allowed to cool to 120°C, and then 1983.5 g toluene were added. After the reaction mixture reached 70°C, 24.3 g DETA in a Ca(OH)₂ slurry (77.0 g Ca(OH)₂) were added. Further 452.8 g toluene and 49.1 g water were added, and the mixture was heated to 92°C, where it was held for 30 minutes.

A Dean-Stark apparatus was installed to the reaction vessel, and the temperature was continuously increased to 116-117°C. After 45 minutes, all water was removed. The product was allowed to cool and discharged.

The thus prepared varnish had an acid number of 55,9 mg (KOH)/g and a solids content of 57.9%. The varnish had a viscosity (DIN 8 mm flow cup at 20°C) of 10 s and a dilution ratio (% toluene) of 66%).

### Example 2: Preparation of printing ink

59.9 wt.-% of the varnish according to example 1 were combined with 22.3 wt.-% of permanent yellow DHG N22, 6.2 wt.-% of a phenol modified rosin resin and 12 wt-% toluene. The blend was mixed by stirring until a homogeneous printing ink was obtained.

The printing ink had a viscosity (DIN 8 mm flow cup at 20°C) of 35 s. The ink had a solids content of 55.0%.

### Comparative example 3

A publication gravure ink was prepared as described in example 2, but the varnish according to example 1 was replaced by a standard publication gravure ink varnish (based on a a phenol-modified rosin resin binder).

The comparative printing ink had a viscosity (DIN 8 mm flow cup at 20°C) of 43 s. The ink had a solids content of 58.1%.

Thus, the gravure ink of example 2 according to the present invention and the comparative printing ink of example 3 had comparable characteristics.

### Measurement of dilution rate

The dilution rate determines the amount of solvent (toluene), which has to be added to an ink or extender to achieve a well-defined viscosity at room temperature (20°C), e.g. efflux time of 30 s in a GS-Cup (3 mm orifice). The dilution rate is given as % toluene. For example, a dilution rate of an extender of 120% means that 120 g of toluene have to be added to 100 g of extender to achieve the defined viscosity of 30 s.

For the printing ink of the present invention according to example 2, a dilution rate of 93 % was measured, whereas for the varnish of comparative example 3 also a dilution rate of 93% was measured.

Thus, the gravure ink of example 2 according to the present invention and the comparative printing ink of example 3 had comparable dilution characteristics.

### Blocking test

The ink according to example and the ink according to comparative example 3 were printed using a publication gravure printing machine onto paper. The prints were allowed to dry for 2 min and put against the rear side of another piece of the same paper. The papers were put between two metal clamps. A pressure of 50 bar was applied onto the papers for 2 min at 20 °C. Thereafter, the papers were released from the clamp, and adhesion between the papers was evaluated.

Both inks showed good and comparable blocking behaviour.

### Optical density

To evaluate an ink regarding its physical properties optical density, color shade and gloss, the preparation of a print-out is necessary. Therefore, the extended (extended with a conventional extender in a ratio of ink to extender of 70:30) or unextended ink sample is diluted to achieve a desired print viscosity and printed on paper, e.g. LWC or SC paper, using a printing machine, e.g. Moser II Cyl. 20.

The optical density and color shade is measured using a color measurement instrument, e.g. GretagMacbeth Spectrolino (measuring of remission).

The optical density is given as a logarithmic function of the remission value.

The Gloss was measured using a reflectometer (directed reflection) and given as gloss-units.

| Substrate | Coated paper (pure ink) | | Coated paper (extended ink) | |
|---|---|---|---|---|
| | Comp. Example 3 | Example 2 | Comp. Example 3 | Example 2 |
| Gravure Field | | | | |
| 10 | 2,07 | 2, 02 | 1,88 | 1,85 |
| 9 | 1,89 | 1,80 | 1, 64 | 1, 62 |
| 8 | 1, 62 | 1,57 | 1,42 | 1,39 |
| 7 | 1,36 | 1,36 | 1,22 | 1,19 |
| 6 | 1,15 | 1,20 | 1,08 | 1,07 |
| 5 | 0, 95 | 1,00 | 0, 92 | 0, 92 |
| 4 | 0,78 | 0,85 | 0,79 | 0,80 |
| 3 | 0,56 | 0, 62 | 0, 60 | 0, 60 |
| 2 | 0,41 | 0,45 | 0,43 | 0,42 |
| 1 | 0,27 | 0,27 | 0,26 | 0,26 |
| Gloss | 46 | 44 | 43 | 43 |
| % Toluene | 93 | 91 | 93 | 90 |

Both inks showed good and comparable optical density and gloss values.

## Claims

1. Composition comprising
- tall oil pitch,
- an α,β-unsaturated carboxyl acid, preferably maleic acid or a derivate therefrom, most preferably maleic anhydride,
- an amine,
- a resin having a softening point above 80°C, preferably modified tall oil resin, most preferably fumarized tall oil resin,
- a compound of a metal in the oxidation state +II, preferably calcium hydroxide,
- toluene,
- water.

2. Composition according to claim 1, wherein the amount of tall oil pitch is in the range from 30 to 50 wt.-%, based on the weight of the entire composition.

3. Composition according to claim 1 or 2, wherein the amount of α,β-unsaturated carboxyl acid, preferably maleic acid or a derivate therefrom, most preferably maleic anhydride, is in the range from 2 to 7.5 wt.-%, based on the weight of the entire composition.

4. Composition according to any of claims 1 to 3, wherein the amount of amine is in the range from 0.2 to 3.5 wt.-%, based on the weight of the entire composition.

5. Composition according to any of claims 1 to 4, wherein the amount of resin having a softening point above 80°C, preferably modified tall oil resin, most preferably fumarized tall oil resin, is in the range from 5 to 25 wt.-%, based on the weight of the entire composition.

6. Composition according to any of claims 1 to 5, wherein the amount of a compound of a metal in the oxidation state +II, preferably calcium hydroxide, is in the range from 1.5 to 2.5 wt.-%, based on the weight of the entire composition.

7. Varnish, comprising,
- the reaction product of tall oil pitch, an α,β-unsaturated carboxyl acid, preferably maleic acid or a derivate therefrom, most preferably maleic anhydride, and an amine, in the form of a salt thereof wherein the counter-ion is a metal in the oxidation state +II, preferably Ca²⁺,
- a resin having a softening point above 80°C, preferably modified tall oil resin, most preferably fumarized tall oil resin, or a salt thereof wherein the counter-ion is a metal in the oxidation state +II, preferably Ca²⁺,
- toluene,
- water.

8. The varnish according to claim 7, wherein the varnish has an acid number in the range from 50 to 80 mg (KOH)/g, preferably from 55 to 70 mg (KOH)/g.

9. The varnish according to claim 7 or 8, wherein the varnish prepared as above has a solids content in the range from 40 to 70%, preferably 50 to 60%.

10. A process for preparing a varnish according to any of claims 7 to 9, comprising the steps of:
a) mixing tall oil pitch with an α,β-unsaturated carboxyl acid, preferably maleic acid or a derivate therefrom, most preferably maleic anhydride, and heating said mixture,
b) adding a resin having a softening point above 80°C, preferably modified tall oil resin, most preferably fumarized tall oil resin, a compound of a metal in the oxidation state +II, preferably calcium hydroxide, an amine, toluene, and water,
c) removing the water.

11. A printing ink composition, comprising
- a colorant
- a varnish according to any of claims 7 to 9,
- optionally an additional extender component,
- toluene.

12. The printing ink composition according to claim 11, wherein the amount of said varnish is in a range from 30 to 80 wt.-%, preferably 40 to 70 wt.-%, especially preferred from 50 to 60 wt.-%, based on the weight of the entire printing ink.

13. The printing ink composition according to claim 11 or 12, wherein the amount of said extender component is in the range from 1 to 15 wt.-%, preferably 2 to 10 wt.-%, based on the weight of the entire printing ink.

14. A method for preparing a printing ink composition according to any of claims 11 to 13, comprising the step of mixing a varnish according to any of claims 7 to 9, a colorant, toluene, and optionally an additional binder component.

15. Use of a printing ink composition according to any of claims 11 to 13 for publication gravure printing.
